# EUROPÄISCHE PATENTSCHRIFT

(11) **EP 0 778 248 B1**
(45) Veröffentlichungstag und Bekanntmachung des Hinweises auf die Patenterteilung: **10.02.1999**
(21) Anmeldenummer: 96118595.6
(22) Anmeldetag: 20.11.1996
(51) Int. Cl.: C04B 28/08, C04B 18/10

(54) **Verwendung eines hydraulisch erhärtenden, feinteiligen Zweikomponentenbinders, für die Immobilisierung der in den Filterstäuben aus der Hausmüllverbrennung enthaltenen Schadstoffe**
Use of a hydraulic, finely divided, two-component binder for immobilising the pollutants in the filter dusts from waste incineration
Utilisation d'un liant hydraulique à deux composants, finement divisé, pour l'immobilisation des polluants de poussières des filtres de l'incinération des ordures

(30) Priorität: 28.11.1995 DE 19544234; 08.10.1996 DE 19641308
(43) Veröffentlichungstag der Anmeldung: 11.06.1997
(73) Patentinhaber: RWE Energie Aktiengesellschaft, 45128 Essen (DE)
(72) Erfinder: Neuroth, Markus, Dr., 53115 Bonn (DE); Krug, Marion, 45219 Essen (DE); Miskiewicz, Krzysztof, Dr., 53177 Bonn-Bad Godesberg (DE)
(74) Vertreter: Honke, Manfred, Dr.-Ing.

(56) Entgegenhaltungen:
- WO-A-92/06048
- DE-A- 4 416 659
- GB-A- 2 224 024
- PROCEEDINGS OF THE CANMET/ACI INTERNATIONAL CONFERENCE ON THE USE O FLY ASH, SILICA FUME, SLAG AND NATURAL POZZOLANS IN CONCRETE, ISTANBUL, MAY 3 - 8, 1992, Bd. 2, 1.Mai 1992, MALHOTRA V M, Seiten 1637-1650, XP002027233 J.HRAZDIRA: "Activation of slag in gypsumless Portland cements"
- DATABASE WPI Section Ch, Week 7909 Derwent Publications Ltd., London, GB; Class D15, AN 79-16834B XP002027234 & JP 54 008 624 A (RASA SHOJI KK) , 23.Januar 1979

## Beschreibung

Die Erfindung betrifft ein Verfahren zur Immobilisierung der in Filterstäuben aus der Hausmüllverbrennung enthaltenen Schadstoffe gemäß Anspruch 1. Feinteilig meint Körnungen im Bereich von größer Null bis 3 mm. Hausmüllverbrennung meint die Verbrennung von Hausmüll in den üblichen industriellen Müllverbrennungsanlagen. Schadstoffe bezeichnet insbesondere Stoffe, deren Verbindungen die Elemente Pb, Zn, Cu, Cr, As, Sb, Cd, Hg oder Mischungen davon, insbesondere in leicht freisetzbarer Form, enthalten. Die Filterstäube aus der Hausmüllverbrennung führen einen hohen Schwermetallgehalt und sind als Sonderabfall eingestuft. Hoher Schwermetallgehalt meint z. B. einen Blei-Gehalt von mindestens 0,5 Gew.-% und/oder einen Zink-Gehalt von mindestens 1,3 Gew.-%. Insoweit ist zu unterscheiden zwischen den im Rahmen der Erfindung einzubindenden Filterstäuben aus der Hausmüllverbrennung mit hohen Schadstoffgehalten und Verbrennungsrückständen, wie beispielsweise Flugaschen, die in mit Kohlebrennstoffen befeuerten Kraftwerksanlagen anfallen und lediglich einen verhältnismäßig geringen Schadstoffgehalt oder Schwermetallgehalt aufweisen. Insoweit ist weiterhin zu unterscheiden zwischen den im Rahmen der Erfindung eingesetzten Filterstäuben mit hohem Schadstoffgehalt und den beiden Komponenten des Zweikomponentenbinders, insbesondere der langsam reagierenden Komponenten, die ebenfalls Schadstoffe aufweisen können, jedoch in vergleichsweise geringen Mengen. Die erfindungsgemäß einzubindenden schadstoffhaltigen Filterstäube sind in umwelttechnischer Hinsicht extrem problematisch. Sie dürfen nicht freikommen. Eine Verwertung der Filterstäube ist insbesondere im Baustoffbereich, beispielsweise in Form von Zusatzstoffen, aber auch als Binder oder in Form von Bausteinen und Bauelementen möglich, wenn sichergestellt ist, daß die Schadstoffe nicht freikommen.

Bei den bekannten Maßnahmen, von denen die Erfindung ausgeht (DE 39 34 085 C2), werden schwermetallhaltige Abfallstoffe in einem Binder eingebunden und verfestigt. Der Binder weist als erste Komponente eine latenthydraulische Komponente aus beispielsweise einer Flugasche oder Hüttensand auf und weist als zweite Komponente eine alkalische und/oder vorzugsweise erdalkalische Komponente als Anreger für die latenthydraulische Komponente auf. Im Rahmen dieser bekannten Maßnahmen ist es erforderlich, daß der Binder zusätzlich trockene Rückstände aus einer nassen Rauchgasentschwefelung enthält, die mit Calciumoxid, Calciumhydroxid oder Calciumkarbonat betrieben wird und welche Rückstände neben Calciumsulfit und Calciumsulfat, ggf. in Hydratform, auch beispielsweise unverbrauchtes Calciumhydroxid aufweisen. Die nach den bekannten Maßnahmen erhaltenen Verfestigungsprodukte zeigen insbesondere nach längerer Lagerungszeit, beispielsweise nach 90 Tagen, Druckfestigkeiten, die zu wünschen übrig lassen und verbesserungsbedürftig sind. Obwohl nach relativ kurzen Lagerungszeiten, beispielsweise nach einigen Tagen, verhältnismäßig zufriedenstellende Auslaugwerte in bezug auf die Schwermetallfreisetzung meßbar sind, besteht die Gefahr, daß aus diesen Verfestigungsprodukten nach längeren Lagerungszeiten unerwünscht hohe Schwermetallmengen, beispielsweise Blei und Zink, freigesetzt werden. In bezug auf die Druckfestigkeiten und die Eluatwerte sind nach längeren Lagerungszeiten dieser Verfestigungsprodukte keine reproduzierbaren Ergebnisse erzielbar. Nach längerer Wasserlagerung quellen die nach den bekannten Maßnahmen hergestellten Verfestigungsprodukte in störendem Maße auf und zeichnen sich insofern durch eine relativ geringe Raumbeständigkeit aus, die parallel einhergeht mit der unerwünschten Auslaugbarkeit bezüglich der Schwermetalle. Von daher sind die bekannten Maßnahmen insbesondere in bezug auf die langfristige Einbindung und Immobilisierung der Schadstoffe verbesserungsbedürftig. Bei Versuchen konnte eine ausreichende Immobilisierung der in den Filterstäuben aus der Hausmüllverbrennung enthaltenen Schadstoffe, bei Einbindung dieser Filterstäube nach Maßgabe der bekannten Maßnahmen nicht festgestellt werden.

Der Erfindung liegt das technische Problem zugrunde, die in den Filterstäuben aus der Hausmüllverbrennung enthaltenen Schadstoffe mit den Filterstäuben in ein hydraulisches Bindemittel so einzubinden, daß die Schadstoffe nicht mehr freikommen und langfristig wirksam immobilisiert sind.

Die Lösung dieses technischen Problems erreicht die Erfindung durch die Lehre des Patentanspruchs 1. Wenn im folgenden im Rahmen der Erfindung von Filterstäuben gesprochen wird, sind stets solche gemeint, die einen maximalen Sulfat-Gehalt von 10 Gew.-% aufweisen.

Im unabhängigen Patentanspruch 1 ist zunächst die Lehre erfindungswesentlich, wonach die erfindungsgemäß eingesetzte Zweikomponentenbinder-Mischung frei von Rückständen einer nassen Rauchgasentschwefelung ist. Der unabhängige Patentanspruch 1 enthält weiterhin eine gemeinsame Abstimmungsregel, wonach die Zweikomponentenbinder-Mischung und die Filterstäube aus der Hausmüllverbrennung gemischt sowie die Mischungsverhältnisse so gewählt werden, daß die mit dem angegebenen Wasser/Feststoff-Verhältnis angemachte Mischung zu einem bei Wasserlagerung raumbeständigen Verfestigungsprodukt erhärtet, welches bei Raumbeständigkeitstesten nach DIN 52 450 zumindest über einen Zeitraum von 90 Tagen eine Längenänderung von unter 2 mm/m aufweist. Vorzugsweise weist das Verfestigungsprodukt bei Raumbeständigkeitstesten nach DIN 52 450 zumindest über einen Zeitraum von einem Jahr eine Längenänderung von unter 2 mm/m auf. Die Raumbeständigkeitsteste nach DIN 52 450 werden zweckmäßigerweise in bestimmten Zeitabständen innerhalb der genannten Zeiträume durchgeführt.

Der Erfindung liegt zunächst die Erkenntnis zugrunde, daß es zur Lösung des erfindungsgemäßen technischen Problems im Gegensatz zu den oben beschriebenen bekannten Maßnahmen darauf ankommt, dem eingesetzten Binder Rückstände aus einer nassen Rauchgasentschwefelung nicht beizumischen. Diese Rückstände aus einer nassen Rauchgasentschwefelung enthalten Calciumsulfit und Calciumsulfat sowie in der Regel unverbrauchtes Calciumhydroxid und/oder Calciumoxid und/oder Calciumkarbonat. Die Untersuchungen, die der Erfindung zugrundeliegen, lassen den Schluß zu, daß im Rahmen der erfindungsgemäßen Maßnahmen diese Substanzen zumindest langfristig bzw. nach längeren Zeiträumen, an Reaktionen mit den Filterstäuben aus der Hausmüllverbrennung und/oder mit der Umgebung der Verfestigungsprodukte teilnehmen. Dies führt langfristig zur Beeinträchtigung der Druckfestigkeit und zu einer unerwünschten Auslaugbarkeit der Schwermetalle bei den Verfestigungsprodukten. Das ist der Grund, weshalb nach der Lehre der Erfindung die Filterstäube einen Sulfat-Gehalt von über 10 Gew.-% nicht aufweisen. - In Kombination mit der vorstehend dargelegten erfindungsgemäßen Lehre kommt es weiterhin erfindungserheblich auf das Abstimmungsverhältnis an, wonach ein bei Wasserlagerung raumbeständiges Verfestigungsprodukt entsteht, das bei Raumbeständigkeitstesten zumindest über einen Zeitraum von 90 Tagen, vorzugsweise von einem Jahr, nach DIN 52 450 eine Längenänderung von unter 2 mm/m aufweist. Verfestigungsprodukte mit diesem Raumbeständigkeitsverhalten kann der Fachmann ohne weiteres und mit Hilfe von einfachen Versuchen in Kenntnis der erfindungsgemäßen Offenbarung und insbesondere in Kenntnis der weiter unten offenbarten bevorzugten Ausführungsformen und Ausführungsbeispiele herstellen. Überraschenderweise weist ein nach den erfindungsgemäßen Maßgaben und mit den erfindungsgemäßen Raumbeständigkeitswerten hergestelltes Verfestigungsprodukt auch langfristig optimale Druckfestigkeitswerte, Eluatwerte in bezug auf die Schwermetallkomponenten sowie sehr geringe Wasserdurchlässigkeitswerte auf. Diese vorteilhaften Eigenschaften sowie die langfristige Raumbeständigkeit der Verfestigungsprodukte tragen dazu bei, daß diese Verfestigungsprodukte sich hervorragend für den Einsatz im Baustoffbereich, beispielsweise auch als Bausteine oder Bauelemente eignen. Sie können aber auch auf eine Deponie verbracht werden und sind kein Sonderabfall. Bei Verwirklichung der im unabhängigen Patentanspruch 1 gelehrten Merkmalskombinationen können die oben genannten Eigenschaften Druckfestigkeit, Raumbeständigkeit, Eluatwerte und Wasserdurchlässigkeitswerte überraschend reproduzierbar eingestellt werden.

Im Rahmen der Erfindung kommt es wesentlich darauf an, daß zum einen mit einer Schnellbinderkomponente und zum anderen mit einer langsam reagierenden Komponente des Zweikomponentenbinders gearbeitet wird. Die Schnellbinderkomponente trägt zu einem schnellen Abbinden der erfindungsgemäß mit Wasser angemachten Mischung bei. Die Schnellbinderkomponente leistet insoweit einen wichtigen Beitrag zur Druckfestigkeit, zu den geringen Wasserdurchlässigkeitswerten und zu den geringen Eluatwerten der Verfestigungsprodukte. Erfindungswesentlich ist weiterhin der Einsatz einer langsam reagierenden Komponente im Rahmen des Zweikomponentenbinders, wobei die langsam reagierende Komponente latenthydraulische und/oder puzzolanische Stoffe umfaßt. Latenthydraulische Stoffe meint im Rahmen der Erfindung Stoffe, die nicht selbständig, sondern erst durch Zugabe eines Anregers erhärten. Die im Rahmen des Zweikomponentenbinders eingesetzte langsam reagierende Komponente liefert einen wichtigen Beitrag zur Spätfestigkeit der Verfestigungsprodukte. Sie trägt dazu bei, daß auch nach längeren Zeiträumen, also auch noch nach Monaten, eine stetige Zunahme der Festigkeit und eine kontinuierliche Verdichtung des Gefüges der Verfestigungsprodukte stattfindet und liefert somit eine Grundvoraussetzung für die hohe Langzeitstabilität der Verfestigungsprodukte und die langfristige wirksame Immobilisierung der Schadstoffe. Bei Verwirklichung der Maßgaben des unabhängigen Patentanspruchs 1 wird ein abgestimmtes Zusammenspiel der hydraulisch ablaufenden Reaktionen zwischen den Komponenten des Zweikomponentenbinders erreicht, das Zu einer wirksamen chemisch-mineralogischen Immobilisierung der Schadstoffe führt. Insoweit geht die erfindungsgemäß erreichte Immobilisierung über eine rein mechanische Immobilisierung der Schadstoffe hinaus. Dieses durch die erfindungsgemäße Lehre erreichte Ergebnis ist insofern überraschend, als die Filterstäube aus der Hausmüllverbrennung ihrerseits an den Reaktionen bzw. an der Hydratation teilnehmende Komponenten mitbringen, die jedoch die Erzielung des angegebenen Abstimmungsergebnisses (Raumbeständigkeit bei Wasserlagerung) nicht erschweren, sondern vielmehr bei Einhaltung der Maßgaben nach den unabhängigen Patentansprüchen überraschenderweise die Festigkeit und Raumbeständigkeit der Verfestigungsprodukte fördern, so daß eine effektive Immobilisierung der Schadstoffe erzielt wird. Überraschenderweise ist das der Erfindung zugrundeliegende Problem, trotz der breiten Palette der erfindungsgemäß einsetzbaren Zweikomponentenbinder und der Vielzahl der möglichen Schadstoffe in den Filterstäuben gelöst, wenn bei Wasserlagerung raumbeständige Verfestigungsprodukte gemäß dem unabhängigen Patentanspruch 1 entstehen. Die dazu erforderlichen Mischungsverhältnisse in bezug auf die Komponenten des Zweikomponentenbinders einerseits und in bezug auf das Mischungsverhältnis des Zweikomponentenbinders insgesamt mit den Filterstäuben andererseits sind im Rahmen der erfindungsgemäßen Offenbarung durch Versuche leicht zu ermitteln.

Verfahren zur Immobilisierung der Schadstoffe aus Verbrennungsrückständen durch Einmischen in hydraulische Binder und damit Einbringen in die nach Beigabe von Hydratationswasser entstehenden Verfestigungsprodukte sind aus der Praxis bekannt. Sie verwenden jedoch nicht Zweikomponentenbinder, die eine Schnellbinderkomponente und eine langsam reagierende Komponente aufweisen. Die bekannten Maßnahmen sind in bezug auf die langfristige Festigkeit der Verfestigungsprodukte und damit auf die langfristige Einbindung und Immobilisierung der Schadstoffe, jedenfalls wenn es sich um die Schadstoffe aus der Hausmüllverbrennung handelt, verbesserungsbedürftig, - und die Lehre der Erfindung leistet diese Verbesserung. - Aus EP-A 0 139 953 ist ein Verfahren zur Deponierung von Kohlekraftwerk-Reststoffen bekannt. Bei diesen Verbrennungsrückständen aus kohlebefeuerten Anlagen handelt es sich jedoch im Gegensatz zur Erfindung um Verbrennungsrückstände, die verhältnismäßig schadstoffarm sind und mit Schwermetallen kaum belastet sind. Diese im Rahmen der bekannten Maßnahmen zu deponierenden Verbrennungsrückstände aus kohlegefeuerten Anlagen weisen dementsprechend völlig andere chemische und physikalische Eigenschaften als die erfindungsgemäß einzubindenden schadstoffhaltigen Verbrennungsrückstände auf. Nach diesen bekannten Maßnahmen wird wasserhaltiges Calciumsulfat aus einer Entschwefelungsanlage mit Flugasche aus einer Kohlefeuerung vermischt. Insoweit liegt im Gegensatz zur Erfindung keine Schnellbinderkomponente vor, sondern der eingesetzte Rauchgasentschwefelungsgips weist allenfalls abbindefördernde Eigenschaften auf. Außerdem ist im Unterschied zur Erfindung die Zugabe von Calciumhydroxid zur Mischung zwingend erforderlich. Im Gegensatz zur Erfindung werden die vermischten Komponenten als erdfeuchtes Produkt in eine Deponie eingebracht und dort verdichtet. Im Rahmen dieser bekannten Maßnahmen werden keine langfristig raumbeständigen Verfestigungsprodukte erhalten, die langfristig eine ausreichende Druckfestigkeit aufweisen. Ein ähnliches Verfahren zur Deponierung von Kohlekraftwerk-Reststoffen ist aus EP-A 0 209 613 bekannt. Auch für diese bekannten Maßnahmen gelten im wesentlichen die vorstehenden Ausführungen. Insbesondere kommt keine Schnellbinderkomponente zum Einsatz und erfolgt die Abbindung der hergestellten Gemische sehr langsam, nämlich erst im Verlauf von Wochen. Zudem sind zur Herstellung der Mischungen aufwendige Maßnahmen erforderlich, wie die Feinstmahlung von Flugasche und die Einhaltung von Temperaturen zwischen 30 und 50 °C bei der Herstellung und Lagerung der Mischungen. Verfestigungsprodukte mit hohen Druckfestigkeiten, insbesondere mit langfristig hohen Druckfestigkeiten, sind im Rahmen dieser bekannten Maßnahmen nicht erreichbar.

Aus DD 149 136 ist ein Verfahren zur Einbindung von Abfallstoffen beliebiger Art, variabler Zusammensetzung und variabler Korngröße bekannt. Als Bindemittel zur Einbindung der Abfallstoffe werden u. a. Zemente bzw. zementartige Produkte eingesetzt. Der Binder weist im Gegensatz zur erfindungsgemäßen Lehre keine langsam reagierende Komponente, beispielsweise latenthydraulische Komponente, auf, die im Rahmen der bekannten Maßnahmen somit auch keinen Beitrag zur Spätfestigkeit und kontinuierlichen Gefügeverdichtung der Verfestigungsprodukte liefert. Die Einbindung der Abfallstoffe mit Hilfe des Binders erfolgt bei diesen bekannten Maßnahmen rein mechanisch, während nach der erfindungsgemäßen Lehre abgestimmte hydraulisch ablaufende Reaktionen zwischen den beiden Komponenten des Zweikomponentenbinders zu einer chemisch-mineralogischen Immobilisierung der schwermetallhaltigen Schadstoffe führt. Die bekannten Maßnahmen befassen sich nicht mit der Herstellung von bei Wasserlagerung raumbeständigen Verfestigungsprodukten. Die Druckfestigkeiten, insbesondere die langfristig sich einstellenden Druckfestigkeiten lassen bei den nach dem bekannten Verfahren hergestellten Verfestigungskörpern zu wünschen übrig. Dies gilt auch für die relativ hohen Eluatwerte bezüglich der Schwermetallelution. Insgesamt wird eine wirksame und langfristige Immobilisierung von Schadstoffen nach dem bekannten Verfahren nicht erreicht.

Aus DE-PS 26 34 839 ist ein Verfahren zur Verfestigung von Abfällen im flüssigen Zustand oder im Schlammzustand bekannt, wobei Abfälle verschiedenster Herkunft, beispielsweise auch landwirtschaftliche oder häusliche Abfälle, eingesetzt werden. Zum Einbinden der Abfälle wird eine Mischung verwendet, die im wesentlichen Flugasche, Hüttensand und Sulfationen enthält. Als hydraulischer Anreger für den Hüttensand kann Zementklinker eingesetzt werden. Im Gegensatz zur Erfindung wird in dieser Mischung jedoch keine Schnellbinderkomponente eingesetzt. Ein bei Wasserlagerung raumbeständiges Verfestigungsprodukt soll nach diesen bekannten Maßnahmen nicht hergestellt werden. Die Druckfestigkeit der hergestellten Verfestigungsprodukte läßt insbesondere nach längeren Zeiträumen der Lagerung zu wünschen übrig und eine effektive Immobilisierung insbesondere von problematischen schwermetallhaltigen Schadstoffen kann nicht erzielt werden. - Aus DE-PS 36 43 950 ist fernerhin ein Verfahren zur Herstellung eines hydraulischen Bindemittels aus Zementklinker, gemahlener Hochofenschlacke und einer kalkreichen Filterasche bekannt. Dieses Verfahren betrifft im Gegensatz zur Erfindung nicht die Einbindung von schwermetallhaltigen Verbrennungsrückständen. Im übrigen werden im Rahmen dieses Verfahrens nur geringe Mengen an Filteraschen eingesetzt und ist somit der Gehalt an hochwertigen Rohstoffen wie Zementklinker und Hochofenschlacke im Unterschied zur Erfindung sehr hoch.

Nach bevorzugter Ausführungsform der Erfindung werden die beiden Komponenten des Zweikomponentenbinders und die schadstoffhaltigen Filterstäube aus der Hausmüllverbrennung in folgenden Mengenverhältnissen eingesetzt:
Schnellbinderkomponente: 4 bis 18 Gew.-%, vorzugsweise 7 bis 15 Gew.-%,
langsam reagierende Komponente: 21 bis 45 Gew.-%, vorzugsweise 30 bis 35 Gew.-%,
Verbrennungsrückstände: 40 bis 75 Gew.-%, vorzugsweise 50 bis 60 Gew.-%.

Es versteht sich, daß die drei Gewichtsprozentangaben sich für eine erfindungsgemäße Mischung jeweils zu 100 Gew.-% addieren müssen. - Die erfindungsgemäße Verwendung zeichnet sich durch den beachtlichen Vorteil aus, daß verhältnismäßig große Mengen an schadstoffreichen bzw. schwermetallreichen Filterstäuben aus der Hausmüllverbrennung eingebunden und effektiv immobilisiert werden können.

Im einzelnen bestehen im Rahmen der Erfindung mehrere Möglichkeiten der weiteren Ausbildung. So können im Rahmen der Lehre des Patentanspruch 1 die Mischungsverhältnisse stets so gewählt werden, daß das Verfestigungsprodukt einen sehr kleinen Wasserdurchlässigkeitsbeiwert, vorzugsweise einen Wasserdurchlässigkeitsbeiwert von < 5 x 10⁻⁸ m/s nach sieben Tagen aufweist. Im Rahmen der Erfindung sind beachtliche Druckfestigkeiten erreichbar, insbesondere können die Mischungsverhältnisse so gewählt werden, daß das Verfestigungsprodukt nach einem Tag eine Druckfestigkeit von zumindest 0,2 N/mm² und nach 28 Tagen Wasserlagerung eine Druckfestigkeit von zumindest 10 N/mm² aufweist. Die erfindungsgemäß hergestellten Verfestigungsprodukte zeichnen sich aber insbesondere durch eine sich langfristig einstellende hohe Druckfestigkeit aus. So können die Mischungsverhältnisse nach der erfindungsgemäßen Lehre unter Beachtung der erfindungsgemäßen Maßgaben im unabhängigen Patentanspruch 1 so eingestellt werden, daß das Verfestigungsprodukt nach 90 Tagen eine Druckfestigkeit von zumindest 25 N/mm² aufweist. Bezüglich der Schwermetallauslaugung weisen die Verfestigungsprodukte überraschend geringe Eluatwerte auf, so daß die Parameter der Deponieklasse II eingehalten werden.

Im Rahmen der Erfindung kann mit den verschiedensten Schnellbinderkomponenten gearbeitet werden. Nach bevorzugter Ausführungsform der Erfindung ist die Schnellbinderkomponente aus einem Gemisch von Calciumaluminaten und/oder Calciumsilikaten mit kalkhaltiger und/oder sulfathaltiger Flugasche aus mit Kohlebrennstoffen befeuerten Kraftwerksanlagen, insbesondere aus mit Braunkohle befeuerten Kraftwerksanlagen, aufgebaut. Als Schnellbinderkomponente können somit Tonerdeschmelzzement und/oder gemahlene Zementklinker und/oder handelsüblicher Schnellzement eingesetzt werden.

Auch in bezug auf die langsam reagierende Komponente bestehen mehrere Möglichkeiten. So können als latenthydraulische Komponente bzw. puzzolanische Komponente gemahlener Hüttensand und/oder Flugasche aus mit Steinkohle oder Braunkohle befeuerten Kraftwerksanlagen eingesetzt werden.

Nachfolgend werden zwei bevorzugte Ausführungsformen für die Zusammensetzung des hydraulisch erhärtenden, feinteiligen Zweikomponentenbinders einerseits und des Anteils der Filterstäube aus der Hausmüllverbrennung, andererseits angegeben:

| | | |
|---|---|---|
| 1) | Tonerdeschmelzzement: | 9 bis 15 Gew.-% |
| | Braunkohlenflugasche: | 21 bis 35 Gew.-% |
| | Filterstäube aus der Hausmüllverbrennung: | 50 bis 70 Gew.-% |
| 2) | Zementklinker: | 4,5 bis 7,5 Gew.-% |
| | Hüttensand: | 7,5 bis 15 Gew.-% |
| | Braunkohlenflugasche | 18 bis 30 Gew.-% |
| | Filterstäube aus der Hausmüllverbrennung: | 50 bis 70 Gew.-% |

Es versteht sich, daß in einer erfindungsgemäßen Mischung gemäß 1) oder 2) die Gewichtsprozentangaben sich jeweils zu 100 Gew.-% addieren. Wie die oben aufgeführten bevorzugten Ausführungsformen zeigen, wird als wesentlicher Bestandteil des Spätbinders mit puzzolanischen bzw. latenthydraulischen Komponenten handelsüblicher Hüttensand und/oder Braunkohlenflugasche verwendet, vorzugsweise mit einem Sulfat-Gehalt von 1,2 bis 17,5 Gew.-%, einem Gesamt-CaO-Gehalt von 14,1 bis 36,8 Gew.-%, einem Freikalk-Gehalt von 2,0 bis 12,7 Gew.-% und einem MgO-Gehalt von 3,0 bis 16,2 Gew.-%.

Als im Rahmen der Erfindung wesentliche Zusammensetzung der Braunkohlenflugasche gilt z. B. ein SiO₂-Gehalt von 47,4 Gew.-%, ein Al₂O₃-Gehalt von 3,3 Gew.-%, ein Fe₂O₃-Gehalt von 10,5 Gew.-%, ein Sulfat-Gehalt von 3,1 Gew.-%, ein Gesamt-CaO-Gehalt von 23,7 Gew.-%, ein Freikalk-Gehalt von 5,7 Gew.-% und ein MgO-Gehalt von 7,4 Gew.-%. Handelsüblicher Hüttensand besteht z. B. aus den typischen Hauptkomponenten 40 Gew.-% SiO₂, 40 Gew.-% CaO, 10 Gew.-% Al₂O₃ und 10 Gew.-% MgO (Richtzusammensetzung).

Die im Rahmen der Erfindung einzubindenden Filterstäube aus der Hausmüllverbrennung enthalten ggf. Anteile an freien Metallen, insbesondere Zink und Aluminium, die bei Kontakt mit Wasser Wasserstoff freisetzen können. Deshalb können nach einer bevorzugten Ausführungsform der Erfindung die Filterstäube vor ihrem Einmischen in den Zweikomponentenbinder feucht, d. h. unter Wasserzusatz, vorgelagert werden, wobei das belastete Wasser für Anmachzwecke weiter verwendet wird. Nach einer anderen bevorzugten Ausführungsform der Erfindung können den Verbrennungsrückständen vor ihrem Einsatz auch Oxidationsmittel zur Passivierung der Metallpartikel zugefügt werden.

Die im Rahmen der Erfindung hergestellten Verfestigungsprodukte können aufgrund ihrer vorteilhaften Eigenschaften insbesondere im Baustoffbereich eingesetzt werden, beispielsweise in Form von Zuschlagstoffen oder in Form von Bausteinen oder Bauelementen. Es ist auch ein Einsatz der Verfestigungsprodukte als Bergbauversatzstoffe oder Deponiebaustoffe möglich.

Im folgenden wird die Erfindung anhand eines Ausführungsbeispieles ausführlicher erläutert. Das Ausführungsbeispiel bezieht sich auf Filterstäube der Hausmüllverbrennung aus Müllverbrennungsanlagen und arbeitet mit einem Zweikomponentenbinder, der spezielle Schnellbinderkomponenten und spezielle langsam reagierende Komponenten aufweist. Nichtsdestoweniger ist das Ausführungsbeispiel symptomatisch.

### Ausführungsbeispiel

1) Es wurden hydraulisch erhärtende feinteilige Zweikomponentenbinder hergestellt, deren Mischungsverhältnisse in der Tabelle 1 aufgeführt sind. Die in der Tabelle 1 angegebenen Anteile von schadstoffbeladenen Filterstäuben aus Müllverbrennungsanlagen wurden beigemischt und die Mischung mit Wasser, Wasser/Feststoff-Verhältnis 0,33 bis 0,35, angemacht. Aus den Mischungen der Binderkomponenten und der Filterstäube wurden in Anlehnung an DIN 1164 Prismen mit den Maßen 4 x 4 x 16 cm³ hergestellt. Nach 1-6 Tagen Vorlagerung im Klimaschrank (20 °C / 95 % relative Luftfeuchte), abhängig von der jeweiligen Mischung, wurden die Proben bis zum Prüftermin unter Wasser bei 20 °C gelagert. Für Eluatuntersuchungen nach dem Trogverfahren und k-Wert-Bestimmungen nach DIN 18 130 wurden Proctorkörper mit einem Durchmesser von 100 mm und einer Höhe von 120 mm hergestellt, die ebenfalls nach 24 h ausgeformt und bis zum jeweiligen Prüftermin bei 20 °C und einer relativen Luftfeuchte von mindestens 95 % belassen wurden.
2) Als wesentliche Bestandteile des Schnellbinders wurden in den Versuchen handelsüblicher Tonerdeschmelzzement, Schnellzement sowie gemahlener Zementklinker eingesetzt. Als wesentlicher Bestandteil des Spätbinders mit puzzolanischen bzw. latenthydraulischen Komponenten wurde handelsüblicher Hüttensand und/oder Braunkohlenfilterasche mit einem Sulfat-Gehalt von 1,2 bis 17,5 Gew.-%, einem Gesamt-CaO-Gehalt von 14,1 bis 36,8 Gew.-% und einem Freikalk-Gehalt von 2,0 bis 12,7 Gew.-% und einem MgO-Gehalt von 3,0 bis 16,2 Gew.- % verwendet. Typische Bandbreiten für Filterstäube aus Müllverbrennungsanlagen enthalten an Mengen der wesentlichen Schadstoffe: 0,5 bis 1,2 Gew.-% Blei, 1,3 bis 3,9 Gew.-% Zink, 4,0 bis 7,8 Gew.-% Chlorid und 2,0 bis 4,0 Gew.-% Sulfat (als S). Die im Rahmen der Erfindung zu entsorgenden Filterstäube besitzen einen Blei-Gehalt von 0,5 Gew.-%, Zink-Gehalt von 2,0 Gew.-%, Chlorid-Gehalt 5,0 Gew.-% und einen Sulfat-Gehalt (als S) von 3,0 Gew.-%.
3) Die Raumbeständigkeit wurde nach DIN 1060 an Kuchen (die Mischungen wurden hierzu zu fladenförmigen Probekörpern geformt) durchgeführt. Die Kuchen der hier aufgeführten Mischungen zeigen unter Wasser gute Raumbeständigkeit. Nach DIN 52 450 wurden entsprechend der Lehre der geltenden Patentansprüche 1, 2 oder 3 Längenänderungsuntersuchungen bei Kaltwasserlagerung durchgeführt, die eine Aussage über die Raumbeständigkeit des Probekörpers unter Wasser liefern. Die entsprechenden Längenänderungen L in mm/m sind in der Tabelle 2 für die vier Mischungen in Abhängigkeit von dem Zeitraum der Wasserlagerung angegeben. Alle vier Mischungen weisen über den Zeitraum von einem Jahr bzw. 365 Tagen lediglich eine Längenänderung von unter 2 mm/m auf. Insoweit weisen die Probekörper eine außergewöhnlich gute Raumbeständigkeit unter Wasser auf.
4) An den Mischungen wurden Druckfestigkeitsuntersuchungen nach EN 196-1 durchgeführt. Die Ergebnisse der einzelnen Mischungen sind in der Tabelle 3 aufgeführt. Aus dieser Tabelle ist entnehmbar, daß sich langfristig, insbesondere nach einem Zeitraum von 90 Tagen, eine beachtlich hohe Druckfestigkeit der Verfestigungsprodukte einstellt.

Außerdem wurden an den Mischungen Eluatuntersuchungen nach dem Trogverfahren und k-Wert (Wasserdurchlässigkeitsbeiwert) Bestimmungen nach DIN 18 130 durchgeführt, die der Tabelle 4 zu entnehmen sind. In dieser Tabelle ist erkennbar, daß insbesondere die Eluatwerte für die Schwermetalle bereits nach 28 Tagen Wasserlagerung vernachlässigbar klein sind und auch nach 90 Tagen keine höheren Eluatwerte für Zink und Blei gemessen werden. Ebenso sind die Wasserdurchlässigkeitsbeiwerte nach einem längeren Zeitraum, insbesondere nach 90 Tagen, vernachlässigbar klein.

**Tabelle 1**

| Mischung | Zusammensetzung [Gew.-%] | | | | | |
|---|---|---|---|---|---|---|
| | Müllverbrennungsflugasche* | Braunkohlenflugasche | Tonerdeschmelzzement | Zementklinker | Schnellzement | Hüttenstand |
| 1 | 50 | 35 | 15 | - | - | - |
| 2 | 50 | 35 | - | 15 | - | - |
| 3 | 50 | 30 | - | 7,5 | - | 12,5 |
| 4 | 50 | 35 | - | - | 15 | - |

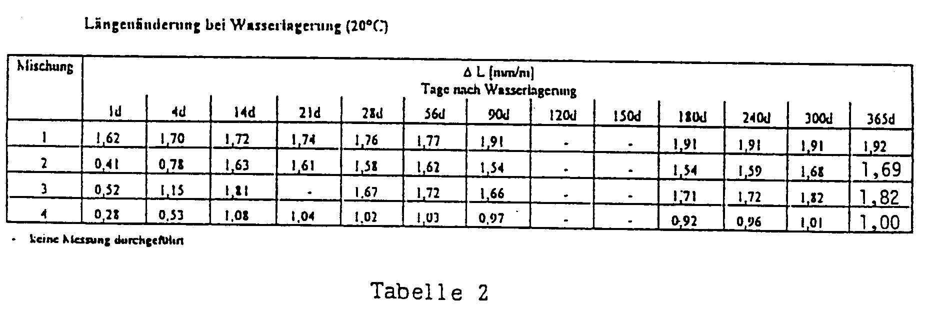

**Tabelle 3**

| Mischung | Druckfestigkeiten [N/mm²] | | |
|---|---|---|---|
| | 7d | 28d | 90d |
| 1 | 6,4 | 10,6 | 11,0 |
| 2 | 4,0 | 15,7 | 27,2 |
| 3 | 2,0 | 26,5 | 31,8 |
| 4 | 6,8 | 24,1 | 31,4 |

**Tabelle 4**

| Nr. | Vl/d | Eluatuntersuchungen nach dem Trogverfahren** | | | | | | |
|---|---|---|---|---|---|---|---|---|
| | | pH-Wert | elektr. Leitfähigk. [µS/cm] | Sulfat [mg/l] | Chlorid [mg/l] | Zink [mg/l] | Blei [mg/l] | k-Wert nach DIN 18 130 [m/s] |
| 1 | 7 | 11,3 | 2530 | 60 | 530 | <0,1 | <0,5 | 4,9·10⁻⁸ |
| | 28 | 10,6 | 1306 | 70 | 240 | <0,01 | <0,05 | 1,7·10⁻⁸ |
| | 90 | 10,8 | 1418 | 70 | 500 | <0,01 | <0,05 | 5,0·10⁻⁹ |
| 2 | 7 | 11,6 | 3530 | 140 | 560 | 0,02 | 0,05 | 5,0·10⁻⁹ |
| | 28 | 11,4 | 1502 | 32 | 205 | <0,01 | <0,05 | 5,1·10⁻¹¹ |
| | 90 | 10,8 | 544 | 12 | 70 | <0,01 | <0,05 | 3,1·10⁻¹² |
| 3 | 7 | 11,6 | 3550 | 120 | 600 | 0,05 | 0,1 | 5,5·10⁻⁹ |
| | 28 | 10,7 | 774 | 52 | 150 | <0,01 | <0,05 | 7,7·10⁻¹¹ |
| | 90 | 10,6 | 323 | 9 | 34 | <0,01 | <0,05 | 2,5·10⁻¹² |
| 4 | 7 | 11,6 | 3860 | 130 | 590 | 0,04 | 0,1 | 2,5·10⁻⁹ |
| | 28 | 11,3 | 1392 | 46 | 190 | <0,01 | <0,05 | 4,5·10⁻¹¹ |
| | 90 | 11,0 | 692 | 23 | 105 | <0,01 | <0,05 | 6,8·10⁻¹² |

## Patentansprüche

1. Verfahren zur Immobilisierung der in Filterstäuben aus der Hausmüllverbrennung enthaltenen Schadstoffe,
wobei ein hydraulisch erhärtender, feinteiliger Binder aus einer Schnellbinderkomponente und einer langsam reagierenden Komponente und frei von Rückständen einer nassen mit Calciumhydroxid und/oder Calciumoxid und/oder Calciumcarbonat betriebenen Rauchgasentschwefelung, gemischt wird,
wobei eine Schnellbinderkomponente auf Basis von Zementen eingesetzt wird,
wobei als langsam reagierende Komponente eine latenthydraulische und puzzolanische Bestandteile enthaltende Komponente eingesetzt wird, die Hüttensand enthält und wobei zusätzlich Braunkohlenflugasche als Mischungskomponente eingesetzt wird,
wobei die Zusammensetzung der Mischung mit 40 bis 75 Gew.-% Filterstäuben, die einen maximalen Sulfatgehalt von 10 Gew.% aufweisen, so eingestellt wird und unter Zugabe von Wasser mit einem Wasser/Feststoff-Verhältnis von 0,33 bis 0,35 so angemacht wird, daß die angemachte Mischung zu einem bei Wasserlagerung raumbeständigen Verfestigungsprodukt erhärtet, welches bei Raumbeständigkeitstesten nach DIN 52 450 zumindest über einen Zeitraum von 90 Tagen eine Längenänderung von unter 2 mm/m aufweist.

2. Verfahren nach Anspruch 1, wobei die Schnellbinderkomponente Tonerdeschmelzzement oder Zementklinker oder Schnellzement enthält.

## Claims

1. A method of immobilising the noxious substances contained in filter dusts from domestic refuse incineration,
wherein a hydraulically setting finely divided binder is mixed from a quick-setting component and a slow-reacting component and free of residues from a wet flue gas desulphurisation operated with calcium hydroxide and/calcium oxide and/or calcium carbonate,
wherein a cement-based quick-setting binder component is used,
wherein the slow-reacting component used is a component which contains latent-hydraulic and pozzuolana ingredients, and which contains foundry sand and wherein lignite flue dust is additionally used as mixture component,
wherein the composition of the mixture is so adjusted with 40 to 75% by weight of filter dusts having a maximum sulphate content of 10% by weight, and is so prepared with the addition of water having a water/solid ratio of 0.33 to 0.35, that the prepared mixture sets to give a compacted product which has a constant volume when stored in water and which, in constant-volume tests to DIN 52 450, has a change of length of less than 2 mm/m at least over a period of 90 days.

2. A method according to claim 1, wherein the quick-setting binder component contains fused alumina cement or cement clinker or quick-setting cement.

## Revendications

1. Procédé pour piéger les matières polluantes contenues dans les poussières filtrées provenant de l'incinération d'ordures ménagères, consistant à mélanger un liant en fines particules à durcissement hydraulique constitué d'un composant à prise rapide et d'un composant à réaction lente et exempt de résidus d'une désulfuration des gaz brûlés par voie humide effectuée avec de l'hydroxyde de calcium et/ou de l'oxyde de calcium et/ou du carbonate de calcium, à mettre en oeuvre un composant à prise rapide à base de ciments, à mettre en oeuvre, comme composant à réaction lente, un composant qui contient des constituants hydrauliques latents et pouzzolaniques ainsi que du sable de laitier, des cendres volantes de lignite étant mises en oeuvre à titre supplémentaire comme composant du mélange, à doser la composition du mélange avec 40 % à 75 % en poids de poussières filtrées présentant une teneur maximale en sulfate de 10 % en poids et à la délayer par addition d'eau selon un rapport eau-matières solides de 0,33 à 0,35, de façon que le mélange délayé durcisse en donnant un produit durci dont le volume reste constant en cas d'immersion dans l'eau et qui, lors des essais de constance volumique selon DIN 52 450, présente une variation de longueur inférieure à 2 mm/m après une période d'au moins 90 jours.

2. Procédé selon la revendication 1, le composant à prise rapide contenant du ciment fondu à base d'alumine ou du clinker ou du ciment à prise rapide.
